# EUROPÄISCHE PATENTSCHRIFT

(11) **EP 3 081 330 B1**
(45) Veröffentlichungstag und Bekanntmachung des Hinweises auf die Patenterteilung: **15.08.2018**
(21) Anmeldenummer: 16000445.3
(22) Anmeldetag: 24.02.2016
(51) Int. Cl.: B23Q 1/62, B23Q 3/155, B23Q 7/04

(54) **VORRICHTUNG ZUM EINSETZEN VON WERKSTÜCKEN ODER WERKZEUGEN IN EINE WERKZEUGMASCHINE**
DEVICE FOR INSERTING WORKPIECES OR TOOLS INTO A MACHINE TOOL
DISPOSITIF DESTINE A INSERER DES PIECES USINEES OU DES OUTILS DANS UNE MACHINE-OUTILS

(30) Priorität: 15.04.2015 DE 102015004840
(43) Veröffentlichungstag der Anmeldung: 19.10.2016
(73) Patentinhaber: VOLLMER WERKE Maschinenfabrik GmbH, 88400 Biberach/Riss (DE)
(72) Erfinder: Bergbaur, Michael, 8322 Graberberg/St. Marein b. Graz (AT)
(74) Vertreter: Thum, Bernhard

(56) Entgegenhaltungen:
- DE-A1- 4 331 064
- DE-A1-102005 004 387

## Beschreibung

Die vorliegende Erfindung betrifft eine Vorrichtung zum Einsetzen von Werkstücken oder Werkzeugen in eine Werkzeugmaschine mit
- wenigstens einer ersten Schlittenanordnung, die wenigstens einer ersten Bewegungsrichtung zugeordnet ist,
- wenigstens einer zweiten Schlittenanordnung, die wenigstens einer zweiten Bewegungsrichtung zugeordnet ist, wobei die erste Schlittenanordnung an der zweiten Schlittenanordnung angeordnet ist,
- wenigstens einer Greifeinrichtung zum Greifen der Werkstücke oder der Werkzeuge, und
- wenigstens einem mit der wenigstens einen Greifeinrichtung verbundenen Schwenkarm,
wobei die erste Bewegungsrichtung quer zur zweiten Bewegungsrichtung verläuft.
Aus dem Stand der Technik sind verschiedene Vorrichtungen zum Einsetzen von Werkstücken oder Werkzeugen in eine Werkzeugmaschine bekannt. Derartige Vorrichtungen werden allgemein auch als Werkzeugwechsler bezeichnet.
DE 10 2005 004 387 A1, die die Basis für den Oberbegriff des Anspruchs 1 bildet, offenbart eine Vorrichtung zum Transportieren von Werkstücken zwischen Pressmaschinen. Die Werkstücktransportvorrichtung umfasst einen Werkstückhalter, einen Zuführmechanismus und eine Hebeantriebseinheit, die ein Werkstück auf und ab bewegt. Die Hebeantriebseinheit umfasst einen Linearmotor. Zwischen einem Paar von Führungselementen ist ein sich linear bzw. geradlinig bewegendes Element vorgesehen. An dem linear beweglichen Element ist ein Verbindungsabschnitt angelegt, der dem anderen bzw. zweiten Ende eines ersten Verbindungsglieds entspricht. Der Werkstückhalter ist am ersten Ende des Verbindungsglieds befestigt. An einem die Vorrichtung unterstützenden Abschnitt zwischen gegenüberliegenden Säulenständern unterhalb des Führungselements ist ein Paar von Auflagen bzw. Halterungen befestigt. Zwischen dem Paar von Auflagen wird ein Abstütz- bzw. Tragelement so geführt, dass es sich in der vertikalen Richtung frei bewegen kann. Das zweite Ende des zweiten Verbindungsglieds ist an diesem Abstützelement angelegt. Durch das Führungselement und das linear bewegliche Element wird ein Führungsabschnitt gebildet, der das zweite Ende des ersten Verbindungsglieds in der vertikalen Richtung linear führt, während durch das Abstützelement ein Abstützpunkt gebildet wird, der das zweite Ende des zweiten Verbindungsglieds drehbar abstützt.

Die Offenlegungsschrift DE 43 00 745 A1 offenbart einen Werkzeugwechsler für eine Werkzeugmaschine. Der Werkzeugwechsler umfasst einen Werkzeuggreifer, der axial verfahrbar angeordnet ist. Zum Verfahren des Werkzeuggreifers dient eine Kurventrommel, welche eine Hubkurve aufweist. In diese Hubkurve kann der Werkzeuggreifer mit einem Steuervorsprung eingreifen. Die Hubkurve ist derart ausgebildet, dass ein von demselben Motor wie die Kurventrommel angetriebenes Schwenkgetriebe in einer Endstellung des Werkzeuggreifers diesen verschwenken kann.

Ferner offenbart die Offenlegungsschrift DE 10 2011 109 288 A1 einen Werkzeugwechsler, der einen Schwenkarm aufweist. Der Schwenkarm ist mit zwei Greifern versehen, um einer Arbeitsspindel ein neues Werkzeug zuzuführen und um von dieser das benutzte Werkzeug zu entnehmen. Der Schwenkarm ist als ein Mehrfachgelenk ausgebildet. Der Schwenkarm wird von einem linearen Antrieb entlang einer durch die Länge der Einzelglieder und der Anlenkpunkte definierten Kurve zwischen einer Werkzeugübergabeposition an einem Werkzeugmagazin und einer Werkzeugwechselposition in dem Arbeitsraum verschwenkt.

Die Offenlegungsschrift DE 43 31 064 A1 offenbart einen Werkzeugwechsler für ein Bearbeitungszentrum. Der Werkzeugwechsler weist einen vertikal verfahrbaren Hubschlitten auf, an welchem ein zweiarmiger Greifer angeordnet ist. Der Greifer ist in einem Greiferkopf gelagert, der zwischen einer Stellung mit horizontaler Greiferachse und mit vertikaler Greiferachse verschwenkbar ist. Die Schwenkbewegung des Greiferkopfs und die Schwenkbewegung des Greifers um seine Greiferachse erfolgen über denselben Antrieb, der die Hubbewegung des Hubschlittens bewirkt.

Die aus dem Stand der Technik bekannten Vorrichtungen haben einen relativ komplexen Aufbau und sind dennoch in der von ihnen überbrückbaren Distanz zwischen Aufnahme des Werkstücks und Übergabe des Werkstücks an die Werkzeugmaschine, d.h. in ihrer Reichweite, beschränkt.

Es ist eine Aufgabe der vorliegenden Erfindung, eine Vorrichtung der eingangs bezeichneten Art bereitzustellen, die einen einfachen und damit kostengünstigen Aufbau aufweist und eine verbesserte Bewegungsreichweite bei kompakter Bauweise bereitstellt.

Diese Aufgabe wird mit einer Vorrichtung mit den Merkmalen des Patentanspruchs 1 gelöst.

Weitere Ausführungsformen sind in den beigefügten Unteransprüchen angegeben.

Die erste Schlittenanordnung der Vorrichtung zum Wechseln von Werkstücken oder Werkzeugen gemäß der Erfindung umfasst wenigstens einen ersten Schlitten und wenigstens einen zweiten Schlitten. Der erste Schlitten und der zweite Schlitten sind relativ zueinander bewegbar. Der erste Schlitten und der zweite Schlitten dienen zur Verlagerung des wenigstens einen Schwenkarms. Wenigstens einer von erstem oder zweitem Schlitten steuert die Schwenkbewegung des wenigstens einen Schwenkarms.

Der erste Schlitten und der zweite Schlitten der ersten Schlittenanordnung sind der ersten Bewegungsrichtung zugeordnet, d.h. die Führungen der beiden Schlitten verlaufen im Wesentlichen parallel zueinander. Der erste und der zweite Schlitten dienen zum Verlagern des Schwenkarms in der ersten Bewegungsrichtung sowie zur Steuerung der Schwenkbewegung des wenigstens einen Schwenkarms. Mit der ersten Schlittenanordnung, die einen ersten Schlitten und einen zweiten Schlitten zum Verlagern und zum Verschwenken des wenigstens einen Schwenkarms aufweist, kann die Bewegungsreichweite der Vorrichtung gemäß der Erfindung vergrößert werden. Die Vorrichtung kann beispielsweise außerhalb und im Abstand zu einer Werkzeugmaschine angeordnet sein. Die Vorrichtung gemäß der Erfindung erlaubt es, dass durch das von der Vorrichtung bereitgestellte Bewegungsmuster und ihre große Reichweite die wenigstens eine Greifeinrichtung zum Übergeben der Werkstücke bzw. der Werkzeuge in die Werkzeugmaschine bewegt werden kann.

Durch die Steuerung der Schwenkbewegung des wenigstens einen Schenkarms mittels wenigstens einem von erstem oder zweitem Schlitten ist kein zusätzlicher Antrieb für die Schwenkbewegung notwendig. Die Schwenkbewegung wird von demselben Antrieb angetrieben, der den ersten und/oder den zweiten Schlitten antreibt. Dies trägt unter anderem zur Vereinfachung des mechanischen Aufbaus der Vorrichtung und zur Verringerung des für die Vorrichtung benötigten Bauraums bei.

Die Schwenkbewegung des wenigstens einen Schwenkarms, d.h. seine Schwenkposition, kann von den Positionen des ersten Schlittens und des zweiten Schlittens und deren Relativposition zueinander abhängig sein. Durch die Abhängigkeit der Schwenkbewegung von den (Relativ-)Positionen des ersten Schlittens und des zweiten Schlittens kann ein definierter Schwenkwinkel erreicht werden, das heißt jede Winkelposition des wenigstens einen Schwenkarms kann einer Position von dem ersten Schlitten und/oder dem zweiten Schlitten zugeordnet werden.

Gemäß einer Ausführungsform der Erfindung kann der wenigstens eine Schwenkarm aufgrund einer Relativbewegung zwischen dem ersten Schlitten und dem zweiten Schlitten zwischen einer Ausgangsstellung und einer Übergabestellung verschwenkbar sein. Die Ausgangsstellung des wenigstens einen Schwenkarms entspricht dabei der Stellung, in der der Schwenkarm bzw. die mit dem Schwenkarm verbundene Greifeinrichtung ein Werkstück beispielsweise an einer Palette greifen kann. Die Ausgangsstellung des wenigstens einen Schwenkarms kann ebenfalls eine Stellung sein, mit der die Greifeinrichtung ein Werkzeug an einem Werkzeugmagazin entnehmen kann. Dieses gegriffene Werkstück oder Werkzeug kann dann in Richtung der Bearbeitungsmaschine, das heißt der Werkzeugmaschine, verlagert werden. Die Übergabestellung entspricht der Stellung des Schwenkarms, in der die an dem Schwenkarm angebrachte Greifeinrichtung das Werkstück oder das Werkzeug an die Werkzeugmaschine übergeben kann.

Die Vorrichtung kann derart ausgebildet sein, dass der wenigstens eine Schwenkarm in seiner Ausgangsstellung über einen vorbestimmten Verlagerungsweg mittels der ersten Schlittenanordnung verfahren werden kann, bevor die Schwenkbewegung des wenigstens einen Schwenkarms ausgelöst wird. Anders ausgedrückt, hängt die Schwenkbewegung des wenigstens einen Schwenkarms von vorbestimmten Positionen ab, die der erste Schlitten und der zweite Schlitten relativ zueinander einnehmen. Dies gilt auch für den Beginn der Schwenkbewegung, der ebenfalls von den Positionen abhängt, die der erste Schlitten und der zweite Schlitten relativ zueinander einnehmen.

Dem ersten Schlitten kann wenigstens ein erster vorbestimmter Verlagerungsweg zugeordnet werden. Ferner kann dem zweiten Schlitten wenigstens ein zweiter zusätzlicher vorbestimmter Verlagerungsweg zugeordnet werden.

Der erste Schlitten und der zweite Schlitten können jeweils eine Schlittenführung aufweisen. Die Schlittenführung des ersten Schlittens kann dabei den ersten Verlagerungsweg festlegen und die Schlittenführung des zweiten Schlittens kann den Verlagerungsweg des zweiten Schlittens festlegen. Die Schlittenführung des zweiten Schlittens kann an dem ersten Schlitten angebracht sein. Ferner kann die Schlittenführung des ersten Schlittens der ersten Schlittenanordnung an der zweiten Schlittenanordnung angebracht sein. Dadurch kann eine Kreuzschlittenanordnung gebildet werden.

Der erste Schlitten kann mit dem zweiten Schlitten gemäß einer Ausführungsform der Erfindung derart gekoppelt sein, dass der erste Schlitten sich zusammen mit dem zweiten Schlitten bewegt. Der zweite Schlitten kann dementsprechend durch Verfahren des ersten Schlittens bewegt werden. Mit anderen Worten können sich der erste Schlitten und der zweite Schlitten aufgrund ihrer Kopplung über den Gesamtverlagerungsweg der ersten Schlittenanordnung gemeinsam bzw. simultan bewegen. Während dieser gemeinsamen bzw. simultanen Bewegung entlang des Gesamtverlagerungswegs kann auch eine Relativbewegung zwischen dem ersten Schlitten und dem zweiten Schlitten ausgeführt werden. Beispielsweise können der erste Schlitten und der zweite Schlitten derart gekoppelt sein, dass der zweite Schlitten schneller angetrieben wird als der erste Schlitten.

Der erste Schlitten kann ferner mit dem zweiten Schlitten derart gekoppelt sein, dass der zweite Verlagerungsweg dem Betrag einer Relativbewegung zwischen dem zweiten Schlitten relativ zu dem ersten Schlitten entspricht. Während der erste Schlitten sich entlang des ihm zugeordneten ersten Verlagerungswegs bewegt, kann der zweite Schlitten weiter relativ zu dem ersten Schlitten bewegt werden. Durch diese Bewegung kann über die erste Schlittenanordnung mit dem ersten Schlitten und dem zweiten Schlitten eine relativ große Bewegungsreichweite erreicht werden. Der gesamte Verlagerungsweg der ersten Schlittenanordnung kann einer Summe des ersten Verlagerungswegs des ersten Schlittens und dem Betrag der Relativbewegung zwischen dem ersten Schlitten und dem zweiten Schlitten entsprechen. Anders ausgedrückt, können der erste Verlagerungsweg und der zweite Verlagerungsweg den Gesamtverlagerungsweg der den ersten Schlitten und den zweiten Schlitten umfassenden ersten Schlittenanordnung festlegen.

Gemäß einer Ausführungsform der Erfindung kann der wenigstens eine Schwenkarm mit dem zweiten Schlitten verbunden sein. Der wenigstens eine Schwenkarm kann drehbar an dem zweiten Schlitten gelagert sein. Durch die Verbindung des wenigstens einen Schwenkarms mit dem zweiten Schlitten kann der wenigstens eine Schwenkarm über die erste Schlittenanordnung mit dem ersten Schlitten und dem zweiten Schlitten über eine relativ große Distanz verfahren und verschwenkt werden, wodurch eine relativ große Bewegungsreichweite der Vorrichtung erreicht wird.

Zur Steuerung der Schwenkbewegung des wenigstens einen Schwenkarms kann der erste Schlitten und/oder der zweite Schlitten mit wenigstens einer Steuereinrichtung zusammenwirken.

Die wenigstens eine Steuereinrichtung kann wenigstens ein Steuerelement und wenigstens eine Steuerkurve aufweisen. Das wenigstens eine Steuerelement kann beispielsweise eine Steuerrolle sein. Das wenigstens eine Steuerelement kann zur Steuerung der Schwenkbewegung des wenigstens einen Schwenkarms entlang der Steuerkurve verlagert werden.

Das wenigstens eine Steuerelement kann gemäß einer Weiterbildung an dem wenigstens einen Schwenkarm vorgesehen sein. Eine Bewegung des zweiten Schlittens kann das wenigstens eine Steuerelement mit der wenigstens einen Steuerkurve in Kontakt bringen. Der wenigstens eine Schwenkarm kann mit der Vorrichtung über eine vorbestimmte Distanz bzw. über einen vorbestimmten Verlagerungsweg in seiner Ausgangsstellung verfahren werden. Kommt das wenigstens eine Steuerelement an den Schwenkarm bzw. an dem zweiten Schlitten mit der wenigstens einen Steuerkurve in Kontakt, so kann eine Schwenkbewegung des Schwenkarms aus seiner Ausgangsstellung in die Übergabestellung ausgelöst werden. Vorzugsweise ist die Steuerkurve derart angeordnet und positioniert, dass eine Bewegung des zweiten Schlittens entlang des zweiten Verlagerungswegs eine Schwenkbewegung des wenigstens einen Schwenkarms auslöst. Der mit dem wenigstens einen Steuerelement versehene Abschnitt des wenigstens einen Schwenkarms kann einen Steuerabschnitt bilden. Der wenigstens eine Schwenkarm kann drehbar an dem zweiten Schlitten gelagert sein. Die Drehachse bzw. der Drehpunkt an dem zweiten Schlitten kann den wenigstens einen Schwenkarm in einen Steuerabschnitt und einen Abschnitt mit der wenigstens einen Greifeinrichtung unterteilen.

Gemäß einer Ausführungsform der Erfindung kann die wenigstens eine Steuerkurve an dem wenigstens einen ersten Schlitten angebracht sein. Dies bedeutet: Die wenigstens eine Steuerkurve wird mit dem ersten Schlitten mitbewegt. Der wenigstens eine Steuerarm wird über den zweiten Schlitten mit der Steuerkurve an dem ersten Schlitten in Kontakt gebracht. Durch diesen Kontakt wird eine Schwenkbewegung des Schwenkarms aus seiner Ausgangstellung in seine Übergabestellung ausgelöst. Vorzugsweise wird der zweite Schlitten schneller angetrieben als der erste Schlitten, so dass sich der zweite Schlitten im Endbereich des dem ersten Schlitten zugeordneten Verlagerungswegs an den ersten Schlitten mit der Steuerkurve annähert und den voranstehend beschriebenen Kontakt zwischen der Steuerkurve und dem Schwenkarm bzw. dessen Steuerelement herstellen kann. Dieser gesamte Vorgang kann erfolgen, während sich der erste Schlitten und der zweite Schlitten (relativ zueinander) bewegen. Während der Schwenkbewegung des wenigstens einen Schwenkarms wird der wenigstens eine Schwenkarm durch die Bewegung des zweiten Schlittens relativ zu dem ersten Schlitten weiter linear verlagert.

Gemäß einer ersten Ausführungsform kann die erste und/oder die zweite Schlittenanordnung über eine einen Motor umfassende Antriebseinrichtung antreibbar sein. Die erste Schlittenanordnung und die zweite Schlittenanordnung können jeweils eine Antriebseinrichtung mit einem Motor aufweisen.

Die Antriebseinrichtung kann einen Riementrieb zum Antreiben der ersten Schlittenanordnung oder der zweiten Schlittenanordnung aufweisen. Die Antriebseinrichtung kann wenigstens eine Spindel umfassen. Der Riementrieb kann einen Antriebsriemen umfassen, der wenigstens zwei Riemenscheiben miteinander verbindet. Eine der Riemenscheiben kann dem Motor und die andere Riemenscheibe kann einer Antriebsspindel zugeordnet sein. Der wenigstens eine Antriebsriemen und die wenigstens eine Spindel können zum Antreiben des ersten und/oder des zweiten Schlittens der ersten Schlittenanordnung verwendet werden.

Die Vorrichtung kann gemäß einer Weiterbildung der Erfindung wenigstens einen Maschinenrahmen umfassen. An dem wenigstens einen Maschinenrahmen kann wenigstens eine Einrichtung zur Aufnahme von Werkzeugen oder Werkstücken angeordnet werden. Beispielsweise kann der Maschinenrahmen der Vorrichtung derart ausgebildet sein, dass Paletten mit Werkstücken oder Werkzeugmagazinen daran angeordnet werden können. Die Einrichtung zur Aufnahme von Werkzeugen oder Werkstücken sind dabei derart an dem Maschinenrahmen vorgesehen, dass sie von einem Greifer der wenigstens einen Greifeinrichtung gegriffen werden können. Zum Greifen der Werkstücke oder Werkzeuge befindet sich der wenigstens eine Schwenkarm in seiner Ausgangsstellung. Die Einrichtung zur Aufnahme von Werkzeugen oder Werkstücken kann wenigstens einen Verriegelungsmechanismus aufweisen. Der Verriegelungsmechanismus kann einen Hebel zum Entriegeln und Verriegeln aufweisen. Die Einrichtung kann ferner Befestigungsleisten aufweisen. An den Befestigungsleisten können Palletten bzw. Platten mit Werkstücken oder Werkzeugen befestigt werden. Die Palletten bzw. Platten können beispielsweise an den Befestigungsleisten angeordnet und dann über den Verriegelungsmechanismus in einer vorbestimmten Position verriegelt bzw. positioniert werden.

Gemäß einer Ausführungsform der Erfindung kann die wenigstens eine Steuerkurve an dem wenigstens einen Maschinenrahmen oder dem ersten Schlitten angeordnet sein. Das wenigstens eine Steuerelement an dem zweiten Schlitten kann mit der Steuerkurve an dem Maschinenrahmen über den zweiten Schlitten in Kontakt gebracht werden und derart eine Schwenkbewegung des Schwenkarms auslösen. Wird die wenigstens eine Steuerkurve am ersten Schlitten angebracht, kann der mit der Vorrichtung erzeugbare Verlagerungsweg in X-Richtung weiter vergrößert werden. Dies liegt darin begründet, dass die Steuerkurve in diesem Fall mit dem ersten Schlitten mitbewegt werden kann. Ferner kann an einem Steuerprofil der Steuerkurve ein sich parallel zur X-Richtung erstreckender Abschnitt vorgesehen sein. Dadurch kann die Reichweite der Vorrichtung weiter erhöht werden.

Die erste Bewegungsrichtung der ersten Schlittenanordnung und die zweite Bewegungsrichtung der zweiten Schlittenanordnung können senkrecht zueinander verlaufen. Die erste Bewegungsrichtung kann beispielsweise der X-Richtung entsprechen. Die zweite Bewegungseinrichtung kann beispielsweise der Y-Richtung entsprechen. Die erste Schlittenanordnung und die zweite Schlittenanordnung können somit eine Kreuzschlittenanordnung bilden.

Die wenigstens eine Greifeinrichtung kann gemäß einer Weiterbildung der Erfindung relativ zu dem wenigstens einen Schwenkarm verlagerbar sein. Dazu kann zwischen dem wenigstens einem Schwenkarm und der wenigstens einen Greifeinrichtung wenigstens eine Stellachse vorgesehen sein. In der Ausgangstellung des wenigstens einen Schwenkarms, in der sich der Schwenkarm senkrecht zur ersten und zur zweiten Bewegungseinrichtung erstreckt, kann die Greifeinrichtung senkrecht zur ersten und zweiten Bewegungsrichtung relativ zu dem wenigstens einem Schwenkarm verlagert werden.

Es kann wenigstens ein Koppelgetriebe vorgesehen sein, das den ersten Schlitten und den zweiten Schlitten miteinander koppelt. Das wenigstens eine Koppelgetriebe kann sich aus einem Riemen und wenigstens zwei Umlenkrollen bzw. Riemenscheiben zusammensetzen. Die beiden Umlenkrollen bzw. Riemenscheiben können an dem ersten Schlitten angebracht sein. Mit dem Koppelgetriebe können der erste Schlitten und der zweite Schlitten zwangsgekoppelt werden. In diesem Fall bewegen sich der erste Schlitten und der zweite Schlitten zusammen bzw. simultan über den Gesamtverlagerungsweg der Vorrichtung. Ferner kann eine Bewegung des zweiten Schlittens von der Bewegung des ersten Schlittens abhängig sein, wobei sich der zweite Schlitten relativ zu dem ersten Schlitten bewegen kann. Dadurch können der erste Schlitten und der zweite Schlitten mit einer einzigen Antriebseinrichtung bzw. einem einzigen Motor angetrieben werden. Der wenigstens eine Riemen des wenigstens einen Koppelgetriebes kann an der wenigstens einen zweiten Schlittenanordnung und an dem zweiten Schlitten angebracht sein. Hierfür können an der zweiten Schlittenanordnung und dem zweiten Schlitten Halterungen vorgesehen sein. Der Riemen kann jeweils über einen Formschluss mit den beiden Halterungen verbunden sein.

Die Vorrichtung kann ferner wenigstens ein Vorspannelement für den wenigstens einen Schwenkarm aufweisen. Das wenigstens eine Vorspannelement kann insbesondere eine Feder sein. Die Feder kann in Form einer Zugfeder ausgebildet sein. Das wenigstens eine Vorspannelement sorgt dafür, dass der wenigstens eine Schwenkarm gegen die wenigstens eine Steuerkurve gedrückt wird, um eine definierte Bewegung des Schwenkarms aus der Ausgangstellung in seine Übergabestellung und zurück zu erreichen.

Die vorliegende Erfindung betrifft ferner ein System mit einer Werkzeugmaschine und einer Vorrichtung der voranstehenden Art, die zum Wechseln von Werkstücken oder Werkzeugen in einer Werkzeugmaschine geeignet ist.

Im Folgenden wird eine Ausführungsform der Erfindung mit Bezug auf die beigefügten Figuren beschrieben. Es stellen dar:
- Figur 1: eine perspektivische Ansicht der Vorrichtung gemäß der Erfindung;
- Figur 2: eine Seitenansicht der Vorrichtung gemäß einer ersten Ausführungsform der Erfindung;
- Figuren 3 bis 6: weitere Seitenansichten der Vorrichtung gemäß der ersten Ausführungsform der Erfindung, die einzelne Bewegungszustände der Vorrichtung gemäß der ersten Ausführungsform der Erfindung zeigen;
- Figur 7: einen vergrößerten Ausschnitt der Seitenansicht gemäß Fig. 2;
- Figuren 8 bis 12: Seitenansichten der Vorrichtung gemäß einer zweiten Ausführungsform der Erfindung, die einzelne Bewegungszustände der Vorrichtung gemäß der zweiten Ausführungsform der Erfindung zeigen; und
- Figur 13: eine vergrößerte Ansicht des Schwenkmechanismus gemäß der Erfindung.

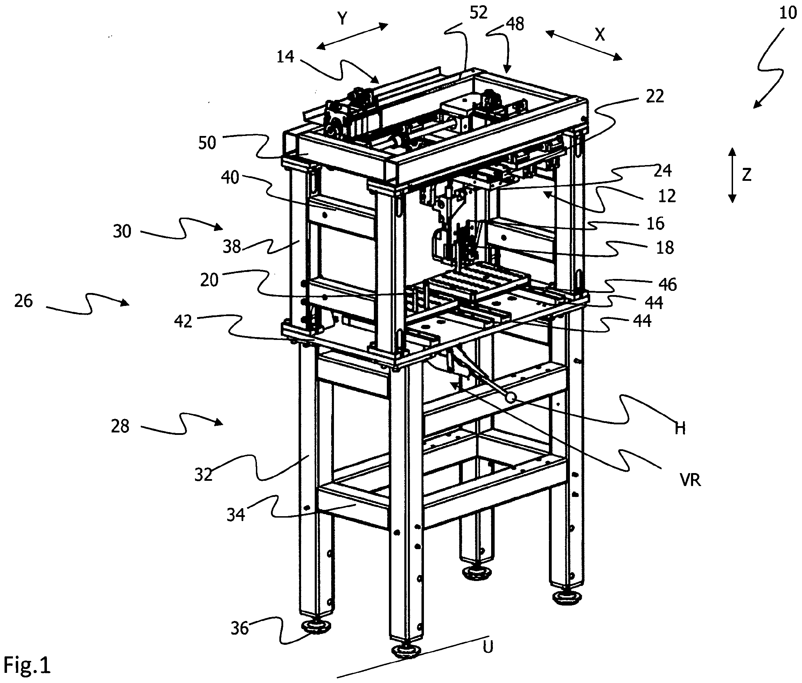

Figur 1 zeigt eine perspektivische Ansicht der Vorrichtung 10 zum Wechseln von Werkstücken oder Werkzeugen in einer Werkzeugmaschine.

Die Vorrichtung 10 umfasst eine erste Schlittenanordnung 12 und eine zweite Schlittenanordnung 14. Die erste Schlittenanordnung 12 ist in X-Richtung verlagerbar. Die X-Richtung entspricht der ersten Bewegungsrichtung. Die zweite Schlittenanordnung 14 ist in Y-Richtung bewegbar. Die Y-Richtung entspricht der zweiten Bewegungsrichtung. An der ersten Schlittenanordnung 12 ist der Schwenkarm 16 vorgesehen. Der Schwenkarm 16 ist mit einer Greifeinrichtung 18 zum Greifen der Werkstücke 20 verbunden.

Die erste Schlittenanordnung 12 umfasst einen ersten Schlitten 22 und einen zweiten Schlitten 24, der an dem ersten Schlitten 22 angeordnet ist. Der zweite Schlitten 24 ist mit dem Schwenkarm 16 verbunden. Die an dem Schwenkarm 16 angebrachte Greifeinrichtung 18 ist relativ zu dem Schwenkarm 16 verlagerbar. In der Ausgangsstellung des Schwenkarms 16 ist die Greifeinrichtung 18 in Z-Richtung relativ zu dem Schwenkarm 16 verlagerbar.

Die Vorrichtung 10 umfasst ferner einen Maschinenrahmen 26, der sich aus einem Untergestell 28 und einem Obergestell 30 zusammensetzt. Das Untergestell 28 weist vier sich in Z-Richtung erstreckende Säulen 32 auf, die über Querelemente 34 miteinander verbunden sind. Die Säulen 32 stützen sich über höhenverstellbare Lagerfüße 36 an einem Untergrund U ab.

Das Obergestell 30 umfasst ebenfalls vier Säulen 38, die sich in Z-Richtung erstrecken. Jeweils zwei der Säulen 38 sind über ein sich in X-Richtung erstreckendes Querelement 40 miteinander verbunden. Zwischen dem Untergestell 28 und dem Obergestell 30 ist eine Zwischenplatte 42 vorgesehen, die das Untergestell 28 mit dem Obergestell 30 verbindet. An der Zwischenplatte 42 sind Befestigungsleisten 44 vorgesehen, an denen Platten 46 mit den Werkstücken bzw. Werkzeugen 20 befestigt werden können. Die Werkstücke 20 können dann über den Greifer bzw. die Greifeinrichtung 18 von den Platten 46 abgenommen und mittels der Schlitten 12, 14 und dem Schwenkarm 16 in eine nicht gezeigte Bearbeitungseinrichtung bzw. Werkzeugmaschine überführt werden. Die Werkstücke 10 können mit der Greifeinrichtung 18 auch aus der Werkzeugmaschine (nicht gezeigt) entnommen und an einer der Platten 46 abgelegt werden. An der Zwischenplatte 42 ist zudem ein Verriegelungsmechanismus VR vorgesehen. Über den Verriegelungsmechanismus VR können die Platten 46 an den Befestigungsleisten 44 in einer vorbestimmten Position positioniert bzw. verriegelt werden. Befindet sich der Verriegelungsmechanismus VR in seiner verriegelten Position können die Platten 46 nicht von den Befestigungsleisten 44 gelöst werden, d.h. die Platten 46 sind in ihrer vorbestimmten Position gesichert. Der Verriegelungsmechanismus VR kann über einen Hebel H von der Verriegelungsstellung in die Entriegelungsstellung und zurück überführt werden. In der Entriegelungsstellung des Verriegelungsmechanismus VR können die Befestigungsleisten 44 mit den Platten 46 bestückt werden.

An dem Obergestell 30 ist ein Tragrahmen 48 vorgesehen, an dem die Schlittenanordnungen 12 und 14 angeordnet sind. Der Tragrahmen 48 setzt sich aus zwei sich in Y-Richtung erstreckenden Elementen 50 und zwei sich in X-Richtung erstreckenden Elementen 52 zusammen.

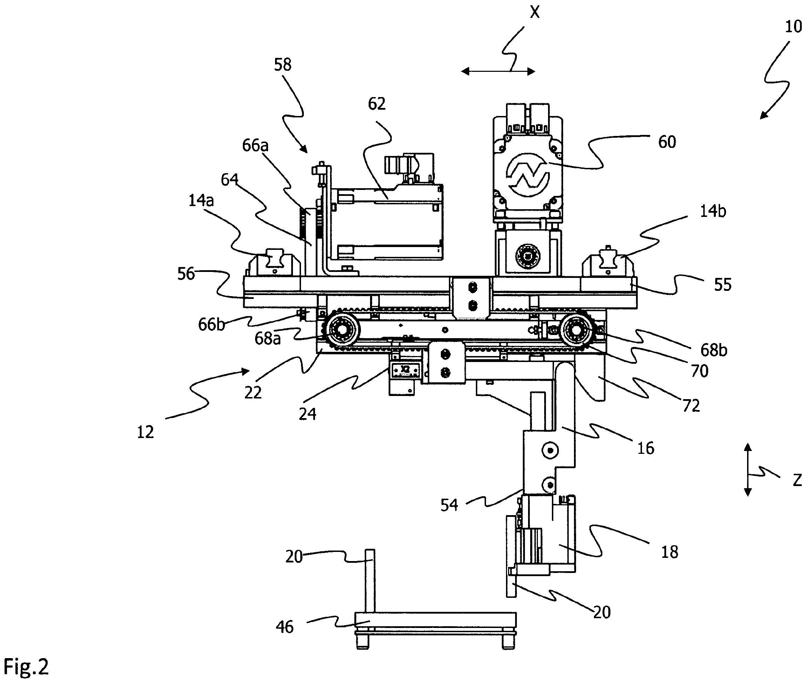

Figur 2 zeigt eine Seitenansicht der Vorrichtung 10 gemäß einer ersten Ausführungsform der Erfindung.

Die erste Schlittenanordnung 12 umfasst den ersten Schlitten 22 und den zweiten Schlitten 24. Der zweite Schlitten 24 ist an dem ersten Schlitten 22 angeordnet. Der Schwenkarm 16 ist am zweiten Schlitten 24 angebracht. An dem Schwenkarm 16 ist die Greifeinrichtung 18 zum Greifen der Werkstücke oder Werkzeuge 20 vorgesehen. Die Greifeinrichtung 18 kann über eine Stellachse 54, die mit dem Schwenkarm 16 in Verbindung steht, in Z-Richtung verfahren werden.

Die erste Schlittenanordnung 12 ist in X-Richtung verlagerbar. Dementsprechend kann der Schwenkarm 16 mittels der ersten Schlittenanordnung 12 in X-Richtung verlagert werden, um Werkstücke 20 von der Platte 46 abnehmen und in Richtung einer nicht gezeigten Werkzeugmaschine verlagern zu können.

In Figur 2 ist ferner eine Aufnahmeplatte 46 gezeigt, in der sich ein Werkstück 20 befindet. Ein weiteres Werkstück 20 befindet sich in der Greifeinrichtung 18 an dem Schwenkarm 16.

Der erste Schlitten 22 ist an einem Führungselement 56 geführt. Das Führungselement 56 ist an einer Trägerplatte 55 angebracht und Teil der zweiten Schlittenanordnung 14. Die zweite Schlittenanordnung 14 ist über Führungselemente 14a und 14b an dem Tragrahmen 18 (siehe Fig. 1) geführt. Die erste Schlittenanordnung 12 ist an der zweiten Schlittenanordnung 14 angeordnet, die an dem Tragrahmen 48 geführt ist. Die erste Schlittenanordnung 12 und die zweite Schlittenanordnung 14 bilden eine Kreuzschlittenanordnung.

In Figur 2 sind die Antriebseinrichtungen 58 und 60 für die erste Schlittenanordnung 12 und die zweite Schlittenanordnung 14 gezeigt. Die Antriebseinrichtung 58 für die erste Schlittenanordnung 12 ist an dem Führungselement 56 angeordnet.

Die die erste Schlittenanordnung 12 antreibende Antriebseinrichtung 58 umfasst einen Motor 62, einen Antriebsriemen 64 und zwei Riemenscheiben 66a und 66b. Die Riemenscheibe 66a ist an dem Motor 64 vorgesehen, und die Riemenscheibe 66b ist mit einer in Figur 2 nicht erkennbaren Spindel verbunden, die den ersten Schlitten 22 antreibt. Die Riemenscheiben 66a und 66b sind über den Antriebsriemen 64 miteinander verbunden. An dem ersten Schlitten 22 sind zwei weitere Riemenscheiben 68a und 68b vorgesehen, die über einen Antriebsriemen 70 miteinander verbunden sind. Die Riemenscheiben 68a und 68b dienen zusammen mit dem Antriebsriemen 70 zum Antreiben des zweiten Schlittens 24.

In Figur 2 ist ferner die Kurvenscheibe 72 erkennbar, die zur Steuerung der Schwenkbewegung des Schwenkarms 16 dient. Auf die Steuerkurve 72 wird im Folgenden im Detail eingegangen.

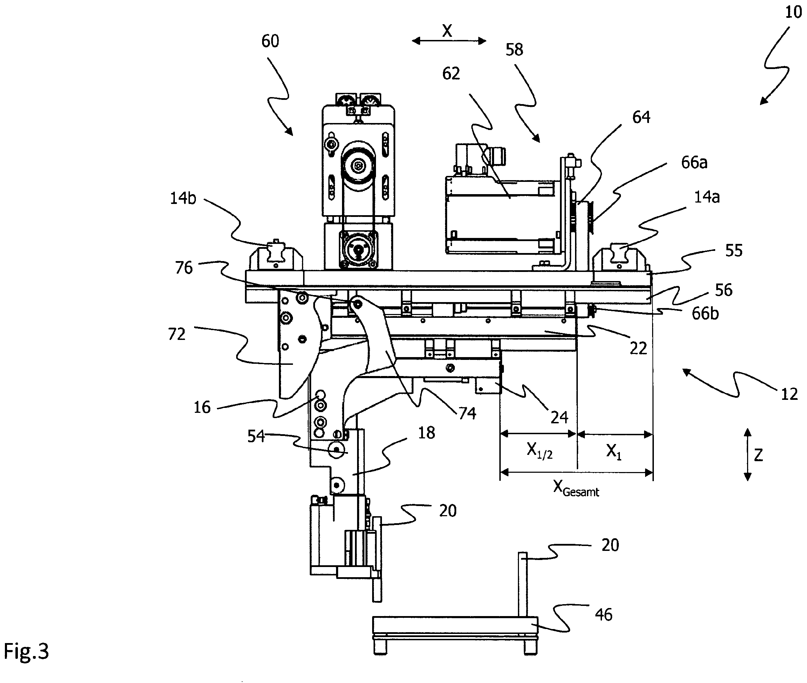

Figur 3 zeigt eine Seitenansicht der Vorrichtung 10. Figur 3 entspricht einer Rückseitenansicht der Ansicht gemäß Figur 2.

Die Steuerkurve 72 ist an dem ersten Schlitten 22 angebracht. Der Schwenkarm 16 weist einen Steuerabschnitt 74 auf. An dem Steuerabschnitt 74 ist eine Steuerrolle 76 vorgesehen, die zum Steuern der Schwenkbewegung des Schwenkarms 16 mit der Steuerkurve 72 zusammenwirkt. Der Schwenkarm 16 ist an dem zweiten Schlitten 24 drehbar gelagert. Der Schwenkarm 16 mit der Greifeinrichtung 18 wird über die Schlittenanordnung 12 in X-Richtung verfahren. Dabei kann der zweite Schlitten 24 den Schwenkarm 16 bzw. dessen Steuerabschnitt 74 mit der Steuerkurve 72 an dem ersten Schlitten 22 nach einem vorbestimmten Verfahrweg in X-Richtung in Kontakt bringen. Der Schwenkarm 16 ist drehbar an dem zweiten Schlitten 24 gelagert. Die in Figur 3 nicht gezeigte Drehachse an dem zweiten Schlitten 24 unterteilt den Schwenkarm 16 in den Steuerabschnitt 74 und einen Abschnitt mit der Greifeinrichtung 18.

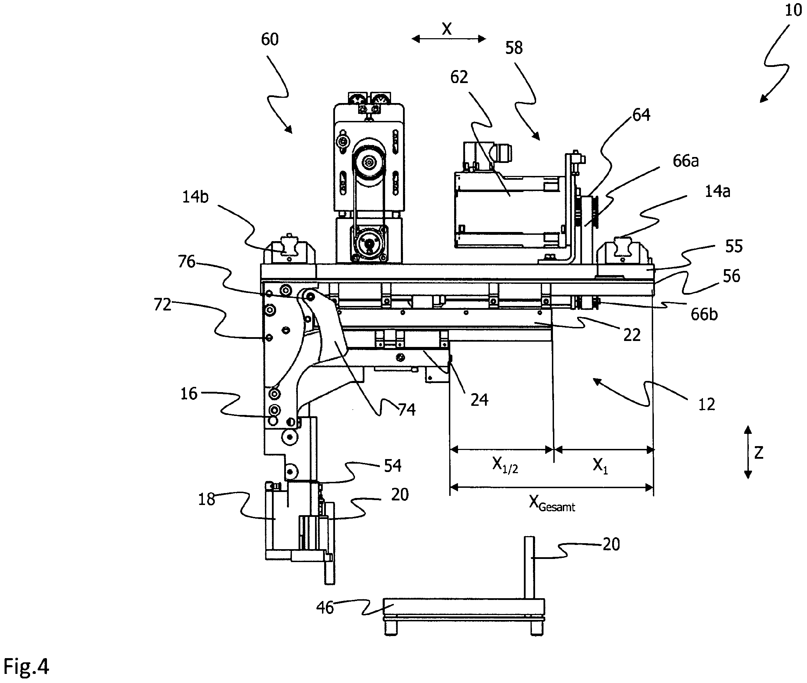

Der erste Schlitten 22 und der zweite Schlitten 24 können gleichzeitig entlang eines vorbestimmten Gesamtverfahrweges X_{Gesamt} der ersten Schlittenanordnung 12 verlagert werden. Der erste Schlitten 22 und der zweite Schlitten 24 führen jedoch auch untereinander eine Relativbewegung aus, wie im Folgenden mit Bezug auf die Figuren 4 bis 6 im Detail beschrieben werden wird. Dabei ist dem ersten Schlitten 22 der Verfahrweg X₁ zugeordnet. Dem zweiten Schlitten 24 ist der Verfahrweg X_{1/2} zugeordnet. Der zweite Verfahrweg X_{1/2} entspricht dem Betrag einer Relativbewegung zwischen dem ersten Schlitten 22 und dem zweiten Schlitten 24. Die Summe der Verfahrwege X₁ und X_{1/2} ergibt den Gesamtverfahrweg X_{Gesamt} der Schlittenanordnung 12.

Da die Steuerkurve 72 an dem ersten Schlitten 22 angebracht ist und sich zusammen mit dem ersten Schlitten 22 bewegt, kann der Schwenkarm 16 über einen vorbestimmten Verfahrweg in der in Figur 3 gezeigten Stellung verfahren werden. Bei dem vorbestimmten Verfahrweg wird der Schwenkarm 16 noch nicht verschwenkt und verbleibt in seiner in Fig. 3 gezeigten Ausgangsstellung. In dieser Stellung des Schwenkarms 16 kann über die Greifeinrichtung 18 ein Werkstück bzw. Werkzeug 20 von der Platte 46 abgenommen werden.

Figur 4 zeigt eine weitere Seitenansicht der Vorrichtung 10, in der der Schwenkarm 16 über die erste Schlittenanordnung 12 weiter in X-Richtung verlagert wurde. Der erste und der zweite Schlitten 22, 24 werden angetrieben und in X-Richtung bewegt. Die Steuerkurve wurde in Figur 4 von dem ersten Schlitten 22 weiter nach links verlagert und befindet sich an der linken Kante des Führungselements 56. Verglichen mit Figur 3 wurde der Schwenkarm 16 von dem zweiten Schlitten 24 an die Steuerkurve 72 angenähert. Es wurde ein erster Kontakt zwischen der Steuerrolle 76 an dem Steuerabschnitt 74 des Schwenkarms 16 und der Steuerkurve 72 hergestellt. Die Steuerrolle 76 liegt somit an einem Abschnitt der Steuerkurve 72 an. Der Schwenkarm 16 befindet sich jedoch noch in seiner Ausgangsstellung.

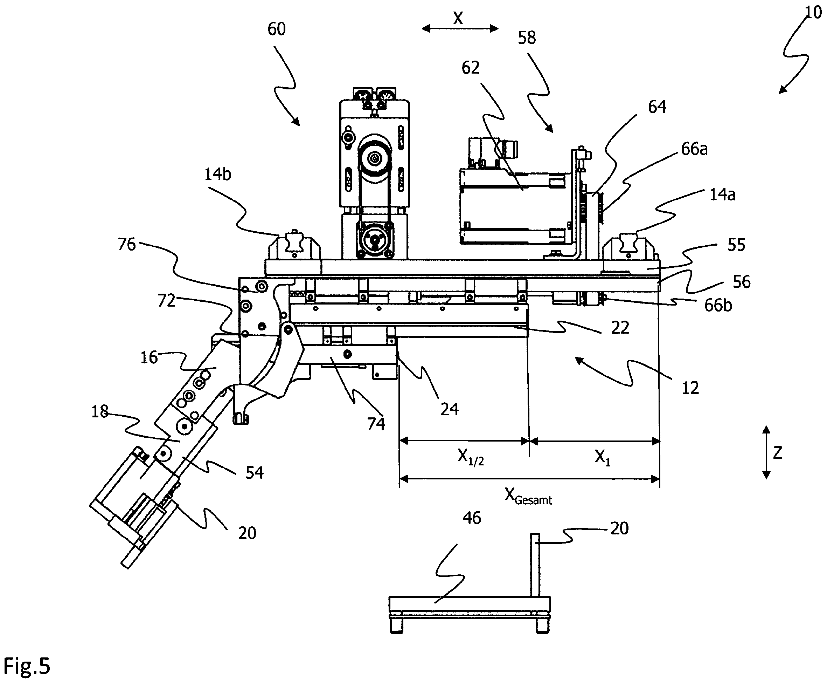

Figur 5 zeigt eine weitere Seitenansicht der Vorrichtung 10, in der die Steuerkurve 72 weiter in X-Richtung von dem ersten Schlitten 22 bewegt wurde. Gleichzeitig hat sich der zweite Schlitten 24 weiter in X-Richtung relativ zu dem ersten Schlitten 22 bewegt.

In der Ansicht gemäß Figur 5 hat die Schwenkbewegung des Schwenkarms 16 begonnen. Die Steuerrolle 76 an dem Steuerabschnitt 74 des Schwenkarms 16 ist bereits entlang eines Abschnitts der Steuerkurve 72 gewandert. Diese Bewegung der Steuerrolle 76 entlang der Steuerkurve 72 wird von einer Bewegung in X-Richtung des zweiten Schlittens 24 relativ zu dem ersten Schlitten 22 veranlasst, an dem der Schwenkarm 16 drehbar gelagert ist. Der erste Schlitten 22 und der zweite Schlitten 24 werden somit zusammen entlang des Verfahrwegs X_{Gesamt} bewegt bzw. verfahren. Durch diese Bewegung in X-Richtung wird die Steuerrolle 76 entlang der Steuerkurve 72 bewegt und eine definierte Schwenkbewegung des Schwenkarms 16 ausgeführt.

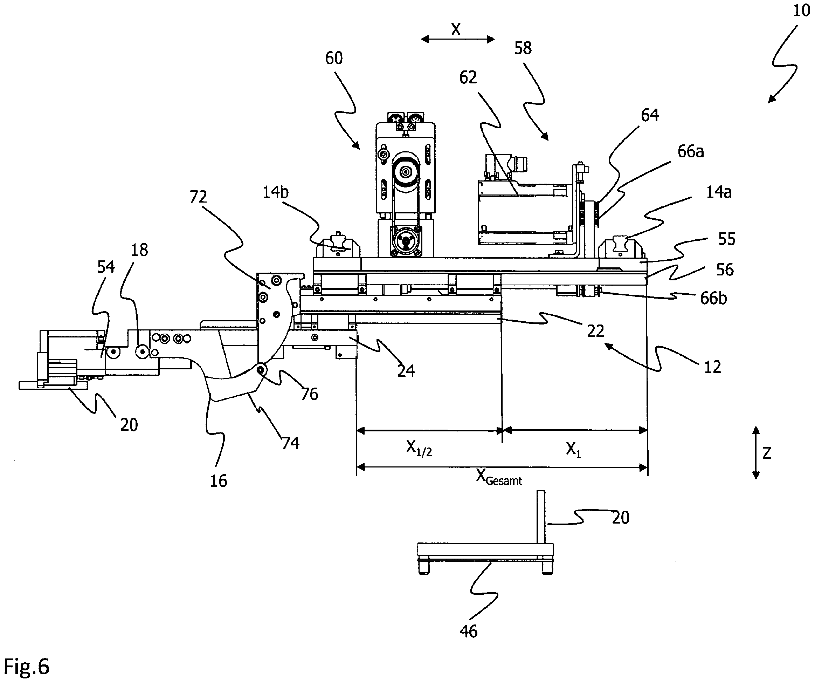

Figur 6 zeigt eine weitere Seitenansicht der Vorrichtung 10, in der sich der Schwenkarm 16 mit der Greifeinrichtung 18 in der Übergabestellung befindet. In dieser Position des Schwenkarms 16 und der Greifeinrichtung 18 kann das Werkzeug oder das Werkstück 20 an die Werkzeugmaschine übergeben werden. Ferner kann in dieser Stellung der Schwenkarm 16 in die Werkzeugmaschine bewegt werden.

Verglichen mit den Figuren 4 und 5 wird erkennbar, dass der zweite Schlitten 24 weiter in X-Richtung verlagert wurde und sich relativ zu dem ersten Schlitten 22 bewegt hat. Dadurch wird die Steuerrolle 76 des Steuerabschnitts 74 weiter entlang dem Steuerprofil der Steuerkurve 72 verlagert, bis sich die Steuerrolle 76 am Ende der Steuerkurve 72 befindet. In dieser Position der Steuerrolle 76 befindet sich der Schwenkarm 16 in der in Figur 6 gezeigten Übergabestellung.

Soll der Schwenkarm 16 zurück in seine Ausgangsstellung bewegt werden, wird die erste Schlittenanordnung 12 bzw. der erste Schlitten 22 und der zweite Schlitten 24 in entgegengesetzter Richtung angetrieben, das heißt in den Figuren 3 bis 6 nach rechts. Durch die Bewegung in X-Richtung des zweiten Schlittens 24 wird die Steuerrolle 76 des Schwenkarms 16 entlang des Profils der Steuerkurve 72 bewegt und der Schwenkarm 16 zurück in seine Ausgangsstellung (Figuren 3 und 4) verschwenkt. Befindet sich der Schwenkarm 16 in seiner Ausgangsstellung, werden der zweite Schlitten 24 und der daran angebrachte Schwenkarm 16 mittels des ersten Schlittens 22 weiter in X-Richtung verfahren.

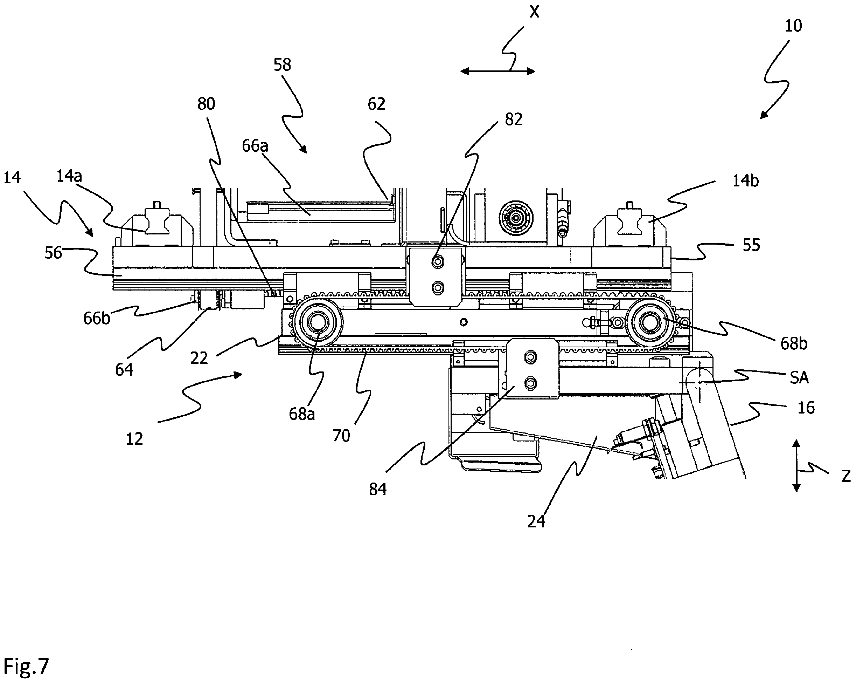

Figur 7 zeigt einen vergrößerten Ausschnitt der Seitenansicht gemäß Figur 2.

In Figur 7 ist eine Spindel 80 erkennbar, die von dem Antriebsriemen 64 über die Riemenscheibe 66b angetrieben wird. Die Spindel 80 dient zum Antreiben des ersten Schlittens 22. Die Spindel 80 kann beispielsweise Teil eines Kugelgewindetriebs zum Antreiben des ersten Schlittens 22 sein.

An dem ersten Schlitten 22 sind die Riemenscheiben 68a und 68b angeordnet, die zum Umlenken des Antriebsriemens 70 vorgesehen sind. Der Antriebsriemen 70 ist über die Halterung 82 an der zweiten Schlittenanordnung 14 angeordnet. Insbesondere ist die Halterung 82 an der Trägerplatte 55 vorgesehen. Der Antriebsriemen 70 ist ferner über eine Halterung 84 an dem zweiten Schlitten 24 befestigt. Der Riemen 70 kann jeweils über einen Form- oder Reibschluss mit den Halterungen 82 und 84 verbunden sein.

Der Riemen 70 und die beiden Riemenscheiben 68a und 68b, die als Umlenkrollen dienen, sind Teil eines Koppelgetriebes zum Antreiben des zweiten Schlittens 24. Über das von dem Riemen 70 und den Riemenscheiben 68a und 68b gebildete Koppelgetriebe wird der erste Schlitten 22 mit dem zweiten Schlitten 24 gekoppelt. Der zweite Schlitten 24 wird über das Koppelgetriebe von dem ersten Schlitten 22 angetrieben. Zwischen dem ersten Schlitten 22 und dem zweiten Schlitten 24 liegt eine Zwangskopplung über das von dem Antriebsriemen 70 und den Riemenscheiben 68a und 68b gebildete Koppelgetriebe vor. Wenn sich der erste Schlitten 22 bewegt, bewegt sich auch der zweite Schlitten 24.

Wie in den Figuren 3 bis 6 erkennbar ist, wird der Schenkarm 16 mittels der Schlitten 22, 24 zunächst über einen vorbestimmten Verfahrweg in seiner in den Figuren 3 und 4 gezeigten Ausgangsstellung verfahren. Nach diesem vorbestimmten Verfahrweg kommt die Steuerrolle 76 mit der Steuerkurve 72 in Kontakt und der Schwenkarm 16 wird in seine Übergabestellung verschwenkt (Figuren 5 und 6). Während der Schwenkbewegung wird der Schwenkarm 16 mittels der Schlitten 22, 24 jedoch weiter in X-Richtung verfahren (siehe Figuren 5 und 6).

Im Folgenden wird eine weitere Ausführungsform der Erfindung beschrieben. Gleichartige und gleichwirkende Komponenten werden mit denselben Bezugszeichen versehen, jedoch mit der Ziffer "1" vorangestellt. Die Vorrichtung 110 gemäß der zweiten Ausführungsform entspricht in ihrem Aufbau und in ihrer Wirkungsweise weitestgehend der Vorrichtung 10 gemäß der ersten Ausführungsform.

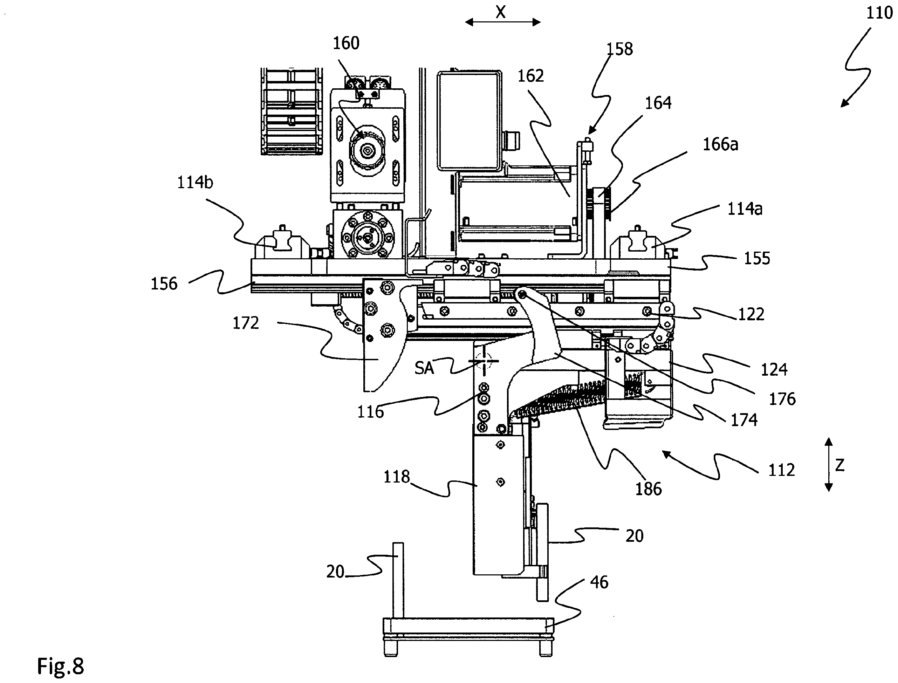

Figur 8 zeigt eine Seitenansicht einer Vorrichtung 110 gemäß einer zweiten Ausführungsform der Erfindung.

Die Steuerkurve 172 gemäß der zweiten Ausführungsform ist an dem ersten Schlitten 122 angebracht und kann mit dem ersten Schlitten 122 bewegt werden. Der Schwenkarm 116 ist über eine Zugfeder 186 mit dem zweiten Schlitten 124 verbunden.
In Figur 8 ist zudem die Schwenkachse SA erkennbar, um die der Schwenkarm 116 verschwenken kann. Die Schwenkachse SA ist an dem zweiten Schlitten 124 vorgesehen. Die Feder 186 dient als Vorspannelement für den Schwenkarm 116. Die Feder 186 sorgt dafür, dass die Steuerrolle 176 bei einer Bewegung des Steuerarms 116 gegen die Steuerkurve 172 gedrückt wird, sodass eine definierte Bewegung des Schwenkarms 116 sichergestellt wird.

In Figur 8 befinden sich der erste Schlitten 122 und der zweite Schlitten 124 in ihrer Ausgangsposition an der rechten Kante des Führungselements 156. Aus dieser Ausgangsposition können der erste Schlitten 122 und der zweite Schlitten 124 in Figur 8 nach links verfahren werden, um den Schwenkarm 116 aus der Ausgangstellung in seine Übergabestellung zu verlagern.

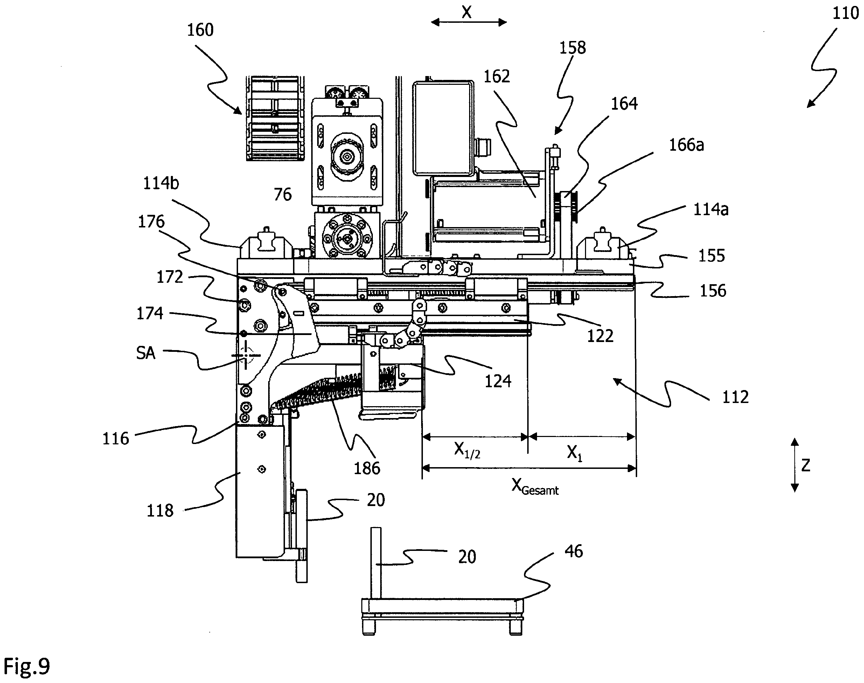

Figur 9 zeigt eine Seitenansicht, bei der die Schlittenanordnung 112 in X- Richtung weiter verlagert wurde. Die Steuerkurve 172 wurde mit dem ersten Schlitten 124 verlagert. Der Schwenkarm 116 wurde über den zweiten Schlitten 124 an die Steuerkurve 172 angenähert, d.h. es wurde eine Relativbewegung zwischen dem ersten Schlitten 122 und dem zweiten Schlitten 124 ausgeführt. Die Steuerrolle 176 wurde in Anlage mit der Kurvenscheibe 172 gebracht. Die Schwenkachse SA des Schwenkarms 116 befindet sich nun hinter der Steuerkurve 172.

Gemäß Figur 9 befindet sich der Schwenkarm 116 noch immer in seiner unverschwenkten Ausgangsstellung.

Bei einem Vergleich der Figuren 8 und 9 wird erkennbar, wie sich die Kurvenscheibe 172 zusammen mit dem ersten Schlitten 122 in X-Richtung bewegt.

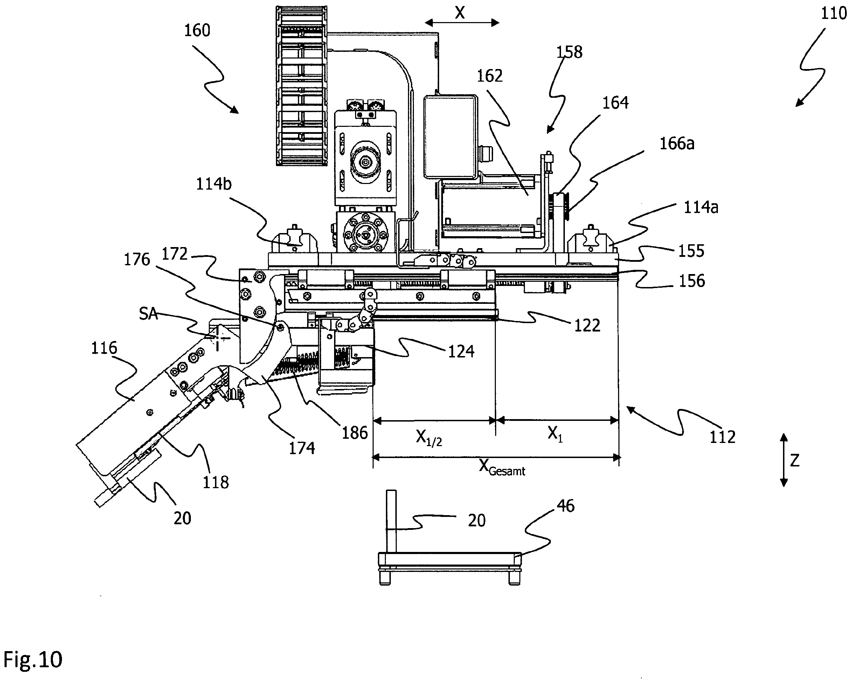

Figur 10 zeigt eine weitere Seitenansicht der Vorrichtung 110, in der der Schwenkarm 116 verschwenkt dargestellt ist.

Die Steuerrolle 176 ist bereits einen Abschnitt entlang der Steuerkurve 172 gewandert, sodass der Schwenkarm 116 um seine Schwenkachse SA verschwenkt wurde. Die Schlittenanordnung 112 mit dem ersten Schlitten 122 und dem zweiten Schlitten 124 wird weiter in X-Richtung verlagert, während der Schwenkarm 116 um seine Schwenkachse SA verschwenkt.

Die als Vorspannelement für den Schwenkarm 116 wirkende Feder 186 wird während der Schwenkbewegung des Schwenkarms 116 gedehnt bzw. gelängt.

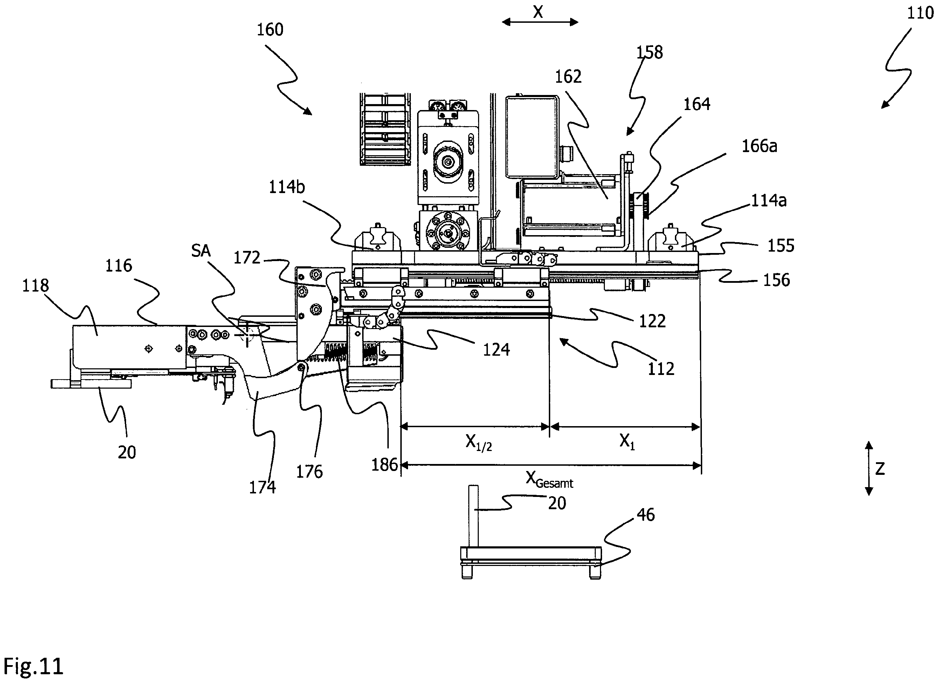

Figur 11 zeigt eine Seitenansicht der Vorrichtung 110, in der der Schwenkarm 116 sich in einer Übergabestellung befindet. Die Steuerrolle 176 befindet sich am Ende des Steuerprofils der Steuerkurve 172. Die Steuerkurve 172 wurde mit dem ersten Schlitten 122 weiter in X-Richtung verlagert und befindet sich nun außerhalb der Erstreckung des Führungselements 156. Durch die Verlagerbarkeit der Steuerkurve 172 mit dem ersten Schlitten 122 kann ein größerer Verfahrweg mit der Vorrichtung 110 erreicht werden.

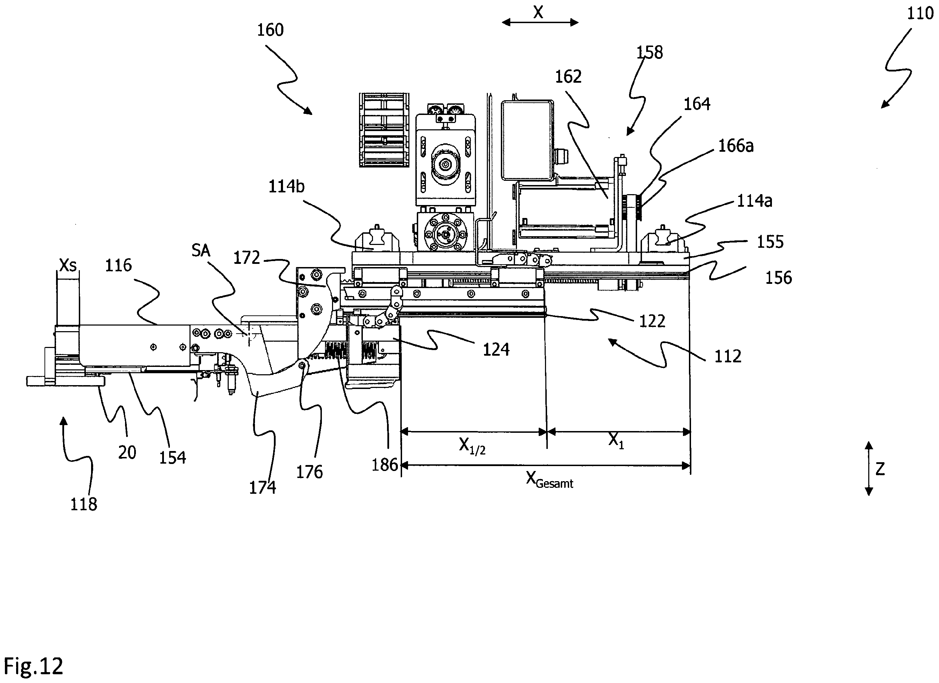

Figur 12 zeigt eine weitere Seitenansicht der Vorrichtung 110, in der sich der Schwenkarm 116 in der Übergabestellung befindet.

Verglichen mit Figur 11 wurde die Greifeinrichtung 118 mittels der Stellachse 154 um den Betrag Xs weiter in X-Richtung verlagert.

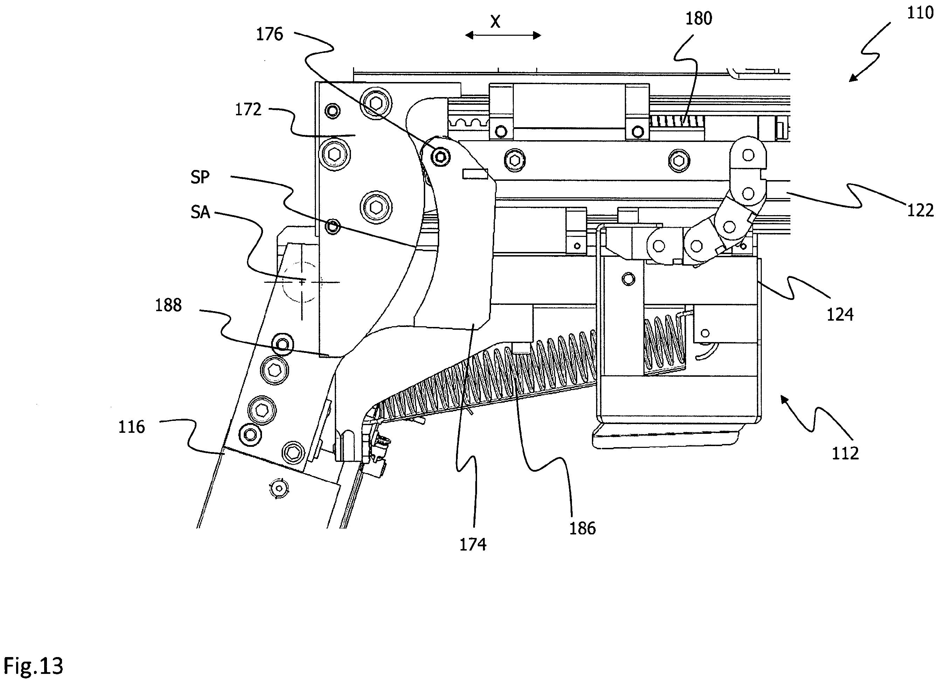

Figur 13 zeigt eine vergrößerte Ansicht des Schwenkmechanismus des Schwenkarms 116 gemäß der zweiten Ausführungsform der Erfindung.

Zwischen dem Schwenkarm 116 und dem zweiten Schlitten 124 erstreckt sich eine Zugfeder 186, die den Schwenkarm 116 um die Schwenkachse SA in Richtung seiner Ausgangsstellung vorspannt. Die Zugfeder 186 ist dazu an dem Schwenkarm 116 und dem zweiten Schlitten 124 befestigt.

Die Steuerkurve 172 ist an dem ersten Schlitten 122 befestigt und kann mit diesem in X-Richtung bewegt werden. Die Steuerrolle 176 an dem Steuerabschnitt 174 des Schwenkarms 116 wird entlang des Steuerprofils SP der Steuerkurve 172 bewegt, um die Schwenkbewegung des Schwenkarms 116 zu steuern. Die Zugfeder 186 spannt den Schwenkarm 116 um die Schwenkachse SA derart in seine Ausgangsstellung vor, dass der Steuerabschnitt 174 bzw. die Steuerrolle 176 in Richtung des Steuerprofils SP der Steuerkurve 172 gedrückt wird.

Die Steuerkurve 172 bzw. das Steuerprofil SP der Steuerkurve 172 weist einen nahezu geradlinig bzw. in X-Richtung verlaufenden Abschnitt 188 auf, der einen zusätzliche Verfahrweg ermöglicht, wenn sich der Schwenkarm 116 bereits in seiner Übergabestellung befindet (siehe Figuren 11 und 12).

Zusammenfassend ist festzuhalten, dass die erfindungsgemäße Vorrichtung 10, 110 über die erste Schlittenanordnung 12, 112 einen verhältnismäßig großen Verfahrweg in X-Richtung bereitstellt. Durch die Bewegung des zweiten Schlittens 24, 124 kann die Schwenkbewegung des Schwenkarms 16, 116 ausgelöst und gesteuert werden. Auch während der Schwenkbewegung wird der Schwenkarm 16, 116 mittels des zweiten Schlittens 14, 114 um eine vorbestimmte Distanz weiter in X-Richtung verlagert.

## Patentansprüche

1. Vorrichtung (10) zum Wechseln von Werkstücken (20) oder Werkzeugen in einer Werkzeugmaschine, mit:
- wenigstens einer ersten Schlittenanordnung (12), die wenigstens einer ersten Bewegungsrichtung (X) zugeordnet ist,
- wenigstens einer Greifeinrichtung (18) zum Greifen der Werkstücke oder der Werkzeuge, und
- wenigstens einem mit der wenigstens einen Greifeinrichtung (18) verbundenen Schwenkarm (16), **gekennzeichnet durch** wenigstens eine zweite Schlittenanordnung (14) die wenigstens einer zweiten Bewegungsrichtung (Y) zugeordnet ist, wobei die erste Schlittenanordnung (12) an der zweiten Schlittenanordnung (14) angeordnet ist und wobei die erste Bewegungsrichtung (X) quer zur zweiten Bewegungsrichtung (Y) verläuft, wobei zumindest die erste Schlittenanordnung (12) wenigstens einen ersten und wenigstens einen zweiten Schlitten (22, 24) umfasst, wobei der zweite Schlitten (24) an dem ersten Schlitten (22) angeordnet ist, wobei der erste Schlitten (22) und der zweite Schlitten (24) in der ersten Bewegungsrichtung (X) relativ zueinander bewegbar sind und zur Verlagerung des wenigstens einen Schwenkarms (16) in der ersten Bewegungsrichtung (X) dienen, wobei der wenigstens eine Schwenkarm (16) mit dem zweiten Schlitten (24) verbunden ist, und wobei wenigstens einer von erstem oder zweitem Schlitten (22, 24) eine Schwenkbewegung des wenigstens einen Schwenkarms (16) steuert.

2. Vorrichtung (10) nach Anspruch 1,
wobei der wenigstens eine Schwenkarm (16) aufgrund einer Relativbewegung zwischen dem ersten Schlitten (22) und dem zweiten Schlitten (24) zwischen einer Ausgangsstellung und einer Übergabestellung verschwenkbar ist.

3. Vorrichtung (10) nach Anspruch 1 oder 2,
wobei dem ersten Schlitten (22) wenigstens ein erster vorbestimmter Verlagerungsweg (X₁) zugeordnet ist, und wobei dem zweiten Schlitten (24) wenigstens ein zweiter vorbestimmter Verlagerungsweg (X_{1/2}) zugeordnet ist.

4. Vorrichtung (10) nach Anspruch 3,
wobei der erste Schlitten (22) mit dem zweiten Schlitten (24) derart gekoppelt ist, dass der erste Schlitten (22) sich zusammen mit dem zweiten Schlitten (24) bewegt.

5. Vorrichtung (10) nach Anspruch 3 oder 4,
wobei der erste Schlitten (22) mit dem zweiten Schlitten (24) derart gekoppelt ist, dass der zweite Verlagerungsweg (X_{1/2}) dem Betrag einer Relativbewegung des zweiten Schlittens (24) relativ zu dem ersten Schlitten (22) entspricht.

6. Vorrichtung (10) nach einem der Ansprüche 1 bis 5,
wobei wenigstens einer von erstem oder zweitem Schlitten (22, 24) zur Steuerung der Schwenkbewegung des wenigstens einen Schwenkarms (16) mit wenigstens einer Steuereinrichtung zusammenwirkt.

7. Vorrichtung (10) nach Anspruch 6,
wobei die wenigstens eine Steuereinrichtung wenigstens ein Steuerelement (76) und wenigstens eine Steuerkurve (72) aufweist.

8. Vorrichtung (10) nach Anspruch 7,
wobei das wenigstens eine Steuerelement (76) an dem wenigstens einen Schwenkarm (16) vorgesehen ist.

9. Vorrichtung (10) nach Anspruch 7 oder 8,
wobei eine Bewegung des zweiten Schlittens (24) das wenigstens eine Steuerelement (74) mit der wenigstens einen Steuerkurve (72) in Kontakt bringt.

10. Vorrichtung (10) nach einem der Ansprüche 7 bis 9,
wobei die Steuerkurve (72) an dem wenigstens einen ersten Schlitten (24) angeordnet ist.

11. Vorrichtung (10) nach einem der Ansprüche 1 bis 10,
wobei die erste und/oder die zweite Schlittenanordnung (12, 14) über eine einen Motor umfassende Antriebseinrichtung (58, 60) antreibbar ist.

12. Vorrichtung (10) nach einem der Ansprüche 1 bis 11,
wobei die Vorrichtung (10) wenigstens einen Maschinenrahmen (26) aufweist, an dem wenigstens eine Einrichtung (46) zur Aufnahme von Werkzeugen (20) oder Werkstücken (20) angeordnet ist.

13. Vorrichtung (10) nach Anspruch 12,
wobei die Einrichtung (46) zur Aufnahme von Werkzeugen (20) oder Werkstücken (20) wenigstens einen Verriegelungsmechanismus (VR) aufweist.

14. Vorrichtung (10) nach einem der Ansprüche 1 bis 13,
wobei die erste Bewegungsrichtung (X) und die zweite Bewegungsrichtung (Y) senkrecht zueinander verlaufen.

15. Vorrichtung (10) nach einem der Ansprüche 1 bis 14,
wobei die wenigstens eine Greifeinrichtung (18) relativ zu dem wenigstens einen Schwenkarm (16) verlagerbar ist.

16. Vorrichtung (10) nach einem der Ansprüche 1 bis 15,
wobei wenigstens ein Koppelgetriebe den ersten Schlitten (22) und den zweiten Schlitten (24) miteinander koppelt.

17. Vorrichtung (10) nach Anspruch 16,
wobei sich das wenigstens eine Koppelgetriebe aus wenigstens einem Riemen (70) und wenigstens zwei Umlenkrollen (68a, 68b) zusammensetzt.

18. Vorrichtung (10) nach Anspruch 17,
wobei der wenigstens eine Riemen (70) an der wenigstens einen zweiten Schlittenanordnung (14) und an dem zweiten Schlitten (24) angebracht ist.

19. Vorrichtung (110) nach einem der Ansprüche 1 bis 18,
wobei die Vorrichtung (110) wenigstens ein Vorspannelement (186), insbesondere eine Feder (186), für den wenigstens einen Schwenkarm (116) aufweist.

20. System mit einer Werkzeugmaschine und einer Vorrichtung (10) nach einem der Ansprüche 1 bis 19.

## Claims

1. A device (10) for changing workpieces (20) or tools in a machine tool, comprising:
- at least one first carriage assembly (12) that is associated with at least one first direction of motion (X),
- at least one gripping means (18) for gripping the workpieces or the tools, and
- at least one swivel arm (16) that is connected to the at least one gripping means (18),
**characterized by** at least one second carriage assembly (14) that is associated with at least one second direction of motion (Y), wherein the first carriage assembly (12) is arranged on the second carriage assembly (14) and the first direction of motion (X) is transverse to the second movement direction (Y), wherein at least the first carriage assembly (12) comprises at least one first and at least one second carriage (22, 24), with the second carriage (24) being arranged on the first carriage (22),
wherein the first carriage (22) and the second carriage (24) can be moved relative to one another in the first direction of motion (X) and serve to displace the at least one swivel arm (16) in the first direction of motion (X),
wherein the at least one swivel arm (16) is connected to the second carriage (24),
and wherein at least one from among the first and second carriages (22, 24) controls swiveling movement of the at least one swivel arm (16).

2. The device (10) as set forth in claim 1, wherein the at least one swivel arm (16) can be swiveled by virtue of a relative movement between the first carriage (22) and the second carriage (24) between an initial position and a delivery position.

3. The device (10) as set forth in claim 1 or 2, wherein at least one first predefined displacement path (X₁) is associated with the first carriage (22), and at least one second predetermined displacement path (X_{1/2}) is associated with the second carriage (24).

4. The device (10)as set forth in claim 3, wherein the first carriage (22) is coupled with the second carriage (24) such that the first carriage (22) moves together with the second carriage (24).

5. The device (10) as set forth in claim 3 or 4, wherein the first carriage (22) is coupled with the second carriage (24) such that the second displacement path (X_{1/2}) corresponds to the amount of relative movement of the second carriage (24) relative to the first carriage (22).

6. The device (10) as set forth in any one of claims 1 to 5, wherein at least one from among the first or second carriage (22, 24) cooperates with at least one control device in order to control the swiveling movement of the at least one swivel arm (16).

7. The device (10) as set forth in claim 6, wherein the at least one control device has at least one control element (76) and at least one control cam (72).

8. The device (10) as set forth in claim 7, wherein the at least one control element (76) is provided on the at least one swivel arm (16).

9. The device (10) as set forth in claim 7 or 8, wherein a movement of the second carriage (24) brings the at least one control element (74) into contact with the at least one control cam (72).

10. The device (10) as set forth in any one of claims 7 to 9, wherein the control cam is arranged on the at least one first carriage (24).

11. The device (10) as set forth in any one of claims 1 to 10, wherein the first and/or second carriage assembly (12, 14) can be driven by means of a drive means (58, 60) comprising a motor.

12. The device (10) as set forth in any one of claims 1 to 11, wherein the device (10) has at least one machine frame (26) on which at least one means (46) for receiving tools (20) or workpieces (20) is arranged.

13. The device (10) as set forth in claim 12, wherein the means (46) for receiving tools (20) or workpieces (20) comprises at least one locking mechanism (VR).

14. The device (10) as set forth in any one of claims 1 to 13, wherein the first direction of motion (X) and the second direction of motion (Y) are perpendicular to one another.

15. The device (10) as set forth in any one of claims 1 to 14, wherein the at least one gripping means (18) can be displaced relative to the at least one swivel arm (16).

16. The device (10) as set forth in any one of claims 1 to 15, wherein at least one coupling gear couples the first carriage (22) and the second carriage (24) together.

17. The device (10) as set forth in claim 16, wherein the at least one coupling gear is composed of at least one belt (70) and at least two deflection rollers (68a, 68b).

18. The device (10) as set forth in claim 17, wherein the at least one belt (70) is mounted on the at least one second carriage assembly (14) and on the second carriage (24).

19. The device (110) as set forth in any one of claims 1 to 18, wherein the device (110) has at least one biasing member (186), particularly a spring (186), for the at least one swivel arm (116).

20. A system with a machine tool and a device (10) as set forth in any one of claims 1 to 19.

## Revendications

1. Dispositif (10) de changement de pièces (20) ou d'outils dans une machine-outil, comprenant :
- au moins un premier ensemble de chariots (12) qui est associé à au moins une première direction de déplacement (X),
- au moins un dispositif de préhension (18) pour saisir les pièces ou les outils, et
- au moins un bras pivotant (16) relié audit au moins un dispositif de préhension (18),
**caractérisé par** au moins un deuxième ensemble de chariots (14) qui est associé à au moins une deuxième direction de déplacement (Y), le premier ensemble de chariots (12) étant disposé sur le deuxième ensemble de chariots (14) et la première direction de déplacement (X) s'étendant transversalement à la deuxième direction de déplacement (Y), au moins le premier ensemble de chariots (12) comprenant au moins un premier et au moins un deuxième chariot (22, 24), le deuxième chariot (24) étant disposé sur le premier chariot (22), le premier chariot (22) et le deuxième chariot (24) étant mobiles l'un par rapport à l'autre dans la première direction de déplacement (X) et servant à déplacer ledit au moins un bras pivotant (16) dans la première direction de déplacement (X), ledit au moins un bras pivotant (16) étant relié au deuxième chariot (24) et au moins l'un du premier ou du deuxième chariot (22, 24) commandant un mouvement de pivotement dudit au moins un bras pivotant (16).

2. Dispositif (10) selon la revendication 1,
dans lequel ledit au moins un bras pivotant (16) peut pivoter entre une position de départ et une position de transfert du fait d'un mouvement relatif entre le premier chariot (22) et le deuxième chariot (24).

3. Dispositif (10) selon la revendication 1 ou 2,
dans lequel au moins une première course de déplacement prédéterminée (X₁) est associée au premier chariot (22) et dans lequel au moins une deuxième course de déplacement prédéterminée (X_{1/2}) est associée au deuxième chariot (24).

4. Dispositif (10) selon la revendication 3,
dans lequel le premier chariot (22) est couplé au deuxième chariot (24) de telle sorte que le premier chariot (22) se déplace en même temps que le deuxième chariot (24).

5. Dispositif (10) selon la revendication 3 ou 4,
dans lequel le premier chariot (22) est couplé au deuxième chariot (24) de telle sorte que la deuxième course de déplacement (X_{1/2}) correspond à la quantité d'un mouvement relatif du deuxième chariot (24) par rapport au premier chariot (22).

6. Dispositif (10) selon l'une des revendications 1 à 5,
dans lequel au moins l'un du premier ou du deuxième chariot (22, 24) coopère avec au moins un dispositif de commande pour commander le mouvement de pivotement dudit au moins un bras pivotant (16).

7. Dispositif (10) selon la revendication 6,
dans lequel ledit au moins un dispositif de commande présente au moins un élément de commande (76) et au moins une came de commande (72).

8. Dispositif (10) selon la revendication 7,
dans lequel ledit au moins un élément de commande (76) est prévu sur ledit au moins un bras pivotant (16).

9. Dispositif (10) selon la revendication 7 ou 8,
dans lequel un mouvement du deuxième chariot (24) met en contact ledit au moins un élément de commande (74) avec ladite au moins une came de commande (72).

10. Dispositif (10) selon l'une des revendications 7 à 9,
dans lequel la came de commande (72) est disposée sur ledit au moins un premier chariot (24).

11. Dispositif (10) selon l'une des revendications 1 à 10,
dans lequel le premier et/ou le deuxième ensemble de chariots (12, 14) peuvent être entraînés au moyen d'un dispositif d'entraînement (58, 60) comprenant un moteur.

12. Dispositif (10) selon l'une des revendications 1 à 11,
dans lequel le dispositif (10) présente au moins un bâti de machine (26) sur lequel est disposé au moins un dispositif (46) destiné à recevoir des outils (20) ou des pièces (20).

13. Dispositif (10) selon la revendication 12,
dans lequel le dispositif (46) destiné à recevoir des outils (20) ou des pièces (20) présente au moins un mécanisme de verrouillage (VR).

14. Dispositif (10) selon l'une des revendications 1 à 13,
dans lequel la première direction de déplacement (X) et la deuxième direction de déplacement (Y) sont perpendiculaires l'une à l'autre.

15. Dispositif (10) selon l'une des revendications 1 à 14,
dans lequel ledit au moins un dispositif de préhension (18) est déplaçable par rapport audit au moins un bras pivotant (16).

16. Dispositif (10) selon l'une des revendications 1 à 15,
dans lequel au moins un mécanisme d'accouplement accouple le premier chariot (22) et le deuxième chariot (24).

17. Dispositif (10) selon la revendication 16,
dans lequel ledit au moins un mécanisme d'accouplement est composé d'au moins une courroie (70) et d'au moins deux poulies de renvoi (68a, 68b).

18. Dispositif (10) selon la revendication 17,
dans lequel ladite au moins une courroie (70) est montée sur ledit au moins un deuxième ensemble de chariots (14) et sur le deuxième chariot (24).

19. Dispositif (110) selon l'une des revendications 1 à 18,
dans lequel le dispositif (110) présente au moins un élément de précontrainte (186), en particulier un ressort (186), pour ledit au moins un bras pivotant (116).

20. Système comprenant une machine-outil et un dispositif (10) selon l'une des revendications 1 à 19.
